# FASCICULE DE BREVET EUROPEEN

(11) **EP 1 049 396 B1**
(45) Date de publication et mention de la délivrance du brevet: **08.10.2003**
(21) Numéro de dépôt: 99956083.2
(22) Date de dépôt: 19.11.1999
(51) Int. Cl.: A47J 27/04

(54) **CUISEUR A VAPEUR A REMPLISSAGE LATERAL D'EAU**
DAMPFKOCHTOPF MIT SEITLICHER WASSERZUFÜHRUNG
STEAMER WITH LATERAL WATER FILL

(30) Priorité: 19.11.1998 FR 9814737
(43) Date de publication de la demande: 08.11.2000
(73) Titulaire: SEB S.A., 69130 Ecully (FR)
(72) Inventeur: ROSSI, Fabrice, F-21610 Fontaine Française (FR)
(86) Numéro de dépôt international: FR9902839
(87) Numéro de publication internationale: WO00030510

(56) Documents cités:
- DE-C- 382 440
- FR-A- 2 759 274
- US-A- 2 622 591
- US-A- 4 075 939

## Description

La présente invention concerne un récipient de cuisson à usage domestique, plus particulièrement un cuiseur à vapeur disposant d'une ouverture pour le remplissage d'eau dans son réservoir principal.

Un cuiseur à la vapeur conforme à l'état de la technique comprend généralement deux parties principales, soit la partie chauffante et la partie récipient qui recevra les aliments que l'on souhaite cuire. La partie chauffante, appelée aussi la base, comprend entre autre un réservoir d'eau principal et une partie génératrice de vapeur constituée d'un corps de chauffe et d'un réservoir secondaire de faible volume où le liquide est en contact avec le corps de chauffe. Les deux réservoirs sont reliés par un ou des orifices situés sur la base de ces réservoirs. L'eau passe du réservoir principal au réservoir secondaire par vases communicants. Cette disposition permet de ne porter à ébullition que le volume d'eau situé dans le réservoir secondaire, l'eau évaporée étant compensée par l'apport d'eau venant du réservoir principal. Au cours de la cuisson, la température de l'eau dans le réservoir d'eau principal augmente par conduction thermique de la paroi séparant les deux réservoirs, par l'eau qui les relie et le fond de la base. On remarque alors une faible évaporation dans le réservoir principal. L'augmentation de la température est d'autant plus importante que le niveau des réservoirs baisse et lorsque que l'on atteint quelques millimètres d'eau, la température dans le réservoir principal est telle que de la vapeur y est générée. Lorsque l'eau des deux réservoirs est épuisée, le corps de chauffe voit sa température augmenter au delà de 100°C et un signal d'alarme est généré avec bien entendu l'arrêt de l'alimentation électrique du corps de chauffe.

Il ne reste plus à l'utilisateur, qu'à ouvrir le cuiseur et rajouter de l'eau dans le réservoir principal s'il souhaite poursuivre la cuisson.

Afin d'éviter d'en arriver à cette extrémité, divers systèmes permettant le remplissage ont été proposés.

Le document US 450 328 décrit une casserole à deux étages dont l'étage supérieur dispose d'un bec de remplissage, muni d'un couvercle pour introduire l'eau pendant la cuisson. Ce bec est placé sur la partie haute, c'est à dire relativement loin de la production de la vapeur, pour que, lors de l'ouverture du couvercle, un flux de vapeur de faible intensité s'échappe. Cette solution a comme inconvénient que l'eau froide de remplissage coule sur les aliments disposés sur la grille de cuisson avant de terminer dans le réservoir d'eau bouillante. Il en résulte des dommages aux aliments délicats tels que les poissons dont des morceaux sont entraînés à travers la grille dans le réservoir. De plus, bien que placée dans la partie haute, de la vapeur peut s'échapper lors de l'ouverture du couvercle puisque cette ouverture se situe directement dans l'enceinte de cuisson et occasionner des brûlures à l'utilisateur.

Le document DE 271 877 décrit un ensemble de cuisson pour fruits et légumes avec dispositif récupérateur de jus. Un embout latéral disposant d'une fermeture permet de remplir le réservoir d'eau. Du fait que cet embout arrive directement dans la cuve d'eau bouillante, le réservoir d'eau ne peut être rempli qu'à froid car si l'on tentait d'ouvrir cet embout pendant la cuisson, le flux de vapeur provoquerait de graves brûlures et interdirait le passage de l'eau froide.

Dans le document DE 382 440, nous trouvons la description d'un ensemble de cuisson par génération de vapeur. La particularité de cet ensemble est que la vapeur générée est condensée sur les parois de la cloche en verre enfermant le tout, cette eau de condensation revenant dans le réservoir principal pour être à nouveau transformée en vapeur. Le problème de l'adjonction d'eau ne se pose donc pas puisque l'eau est recyclée en circuit fermé. Aucun passage n'est prévu entre l'extérieur et l'intérieur de la cloche ; la présence de l'eau autour de cette cloche sert à empêcher la vapeur de s'en échapper.

Dans le document FR 2 759 274, nous trouvons la description d'un cuiseur à vapeur comportant une partie chauffante comprenant une structure de base avec un réservoir d'eau relié dans sa partie inférieure à une chambre de production de vapeur placée sous le réservoir, la vapeur s'échappant par l'extrémité supérieure d'un tube traversant le fond du réservoir d'eau. Un orifice de remplissage débouche sur une paroi extérieure de la base. Un couvercle fermant le réservoir présente une ouverture prévue pour le passage d'une cheminée d'évacuation de la vapeur issue de la chambre de production de vapeur vers un récipient de cuisson disposé au dessus du couvercle. Un tel appareil permet le remplissage du réservoir pendant la production de vapeur mais présente l'inconvénient de comporter une cheminée sur laquelle est monté le couvercle. Cette disposition gêne le retrait du couvercle et est particulièrement pénalisante lorsque le couvercle forme un récupérateur de jus de cuisson. De plus, la chambre de production de vapeur est disposée sous le réservoir d'eau, ce qui augmente la hauteur de la base chauffante. Un clapet anti-retour est nécessaire pour éviter des retours de vapeur dans le réservoir d'eau froide. En outre, comme la chambre de production de vapeur n'est pas visuellement accessible, la détection de l'entartrage de ladite chambre n'est pas aisée.

On constate que les solutions connues ne permettent pas de tirer un enseignement pour la réalisation d'une partie chauffante ou base de cuiseur à vapeur permettant le remplissage sans risque du réservoir d'eau pendant la cuisson tout en empêchant la vapeur de s'échapper, dont l'utilisation soit aisée.

Le but de la présente invention est donc une configuration de la base autorisant le remplissage du réservoir sans aucun risque de brûlure pour l'utilisateur tout en empêchant la vapeur de s'échapper par l'orifice de remplissage, et permettant une utilisation aisée.

Un autre but de la présente invention est une configuration de la base permettant de limiter la hauteur de ladite base.

Selon l'invention, ces buts sont atteints avec un cuiseur à vapeur, comprenant une structure de base, un corps de chauffe, un réservoir d'eau en relation avec le corps de chauffe, un couvercle fermant le réservoir, un orifice de remplissage débouchant sur une paroi extérieure de la base et/ou du couvercle, une paroi fermant au moins une partie du volume d'air du réservoir d'eau étant disposée entre le corps de chauffe et l'orifice de remplissage, le couvercle présentant au moins une ouverture prévue pour le passage de la vapeur vers un récipient de cuisson disposé au dessus du couvercle, du fait que la paroi descend dans une zone déprimée reliée au corps de chauffe par un talus ou une nervure, la paroi descendant dans la zone déprimée à une hauteur inférieure à celle du sommet du talus ou de la nervure, l'orifice de remplissage d'une part et le talus ou la nervure d'autre part étant disposés de part et d'autre de la paroi.

Cette disposition permet de créer une barrière étanche à la vapeur entre le corps de chauffe produisant la vapeur et l'orifice de remplissage. En effet, l'eau restant présente dans la zone déprimée ne peut rejoindre la première zone pour être vaporisée. Si nécessaire, plusieurs orifices de remplissage peuvent être disposés en regard d'une ou plusieurs zones déprimées. La paroi ferme le volume où la vapeur est produite mais n'empêche pas l'eau de circuler librement de part et d'autre de la paroi. C'est pourquoi la partie inférieure de la paroi est plongée dans l'eau qui sert d'obstruction à la vapeur. Il faut rappeler que cette vapeur n'est pas sous pression car elle peut s'échapper par la ou les ouvertures ménagées dans le couvercle. La configuration particulière de l'invention permet de garantir le bon fonctionnement du joint d'eau jusqu'à la fin du processus de cuisson.

Avantageusement, le cuiseur comporte un réservoir d'eau secondaire dont l'eau est en contact direct avec le corps de chauffe, le réservoir principal étant relié dans sa partie inférieure avec le réservoir secondaire, le corps de chauffe étant disposé à l'intérieur du réservoir secondaire. Cette disposition permet de réduire la hauteur de la partie chauffante.

Selon une forme de réalisation préférée, la paroi est issue de la face inférieure du couvercle. Cette disposition permet de simplifier la réalisation de la partie chauffante, et de faciliter le nettoyage ainsi que l'utilisation. La paroi peut ainsi s'étendre du couvercle vers le fond du réservoir principal.

Alors, selon un mode de réalisation, la nervure est disposée à la périphérie du réservoir principal et ménage une rigole dont le fond est surélevé par rapport au fond du réservoir principal. Cette disposition permet de réduire l'encombrement du couvercle.

Selon un autre mode de réalisation, la paroi forme une jupe annulaire créant, dans le réservoir principal, un volume de remplissage communiquant avec l'orifice de remplissage. Cette disposition permet d'obtenir une section de passage importante entre la paroi et le fond du réservoir, ce qui facilite le remplissage.

Avantageusement alors le talus ou la nervure est formé par un joint élastomère disposé autour du corps de chauffe à l'intérieur du réservoir secondaire. Cette disposition permet de réduire l'échauffement du fond du réservoir principal.

Selon un autre mode de réalisation, la paroi forme un conduit dont la partie supérieure constitue l'orifice de remplissage.

L'orifice de remplissage peut être intégré dans des moyens de préhension montés sur le couvercle ou la base. Plusieurs orifices de remplissage peuvent être prévus.

Avantageusement, pour retenir les particules ou éviter le bouchage des passages entre le ou les orifices de remplissage et le réservoir principal, ainsi qu'entre le réservoir principal et le réservoir secondaire, l'orifice de remplissage est muni d'un filtre.

L'invention sera mieux comprise grâce à la description détaillée qui va suivre en se référant aux dessins annexés dans lesquels :
- la figure 1 représente la partie chauffante en coupe dans une des formes d'exécution de l'invention,
- la figure 2 représente une perspective du couvercle receveur de jus et du réservoir principal, le corps de chauffe n'étant pas représenté,
- la figure 3 représente une vue en coupe d'une autre forme d'exécution de l'invention par la création d'une rigole pour réaliser le joint d'eau,
- la figure 4 représente une vue en coupe d'un détail d'une variante de réalisation de la forme d'exécution représentée à la figure 1,
- la figure 5 représente une vue en coupe de la partie chauffante d'une autre forme d'exécution de l'invention.

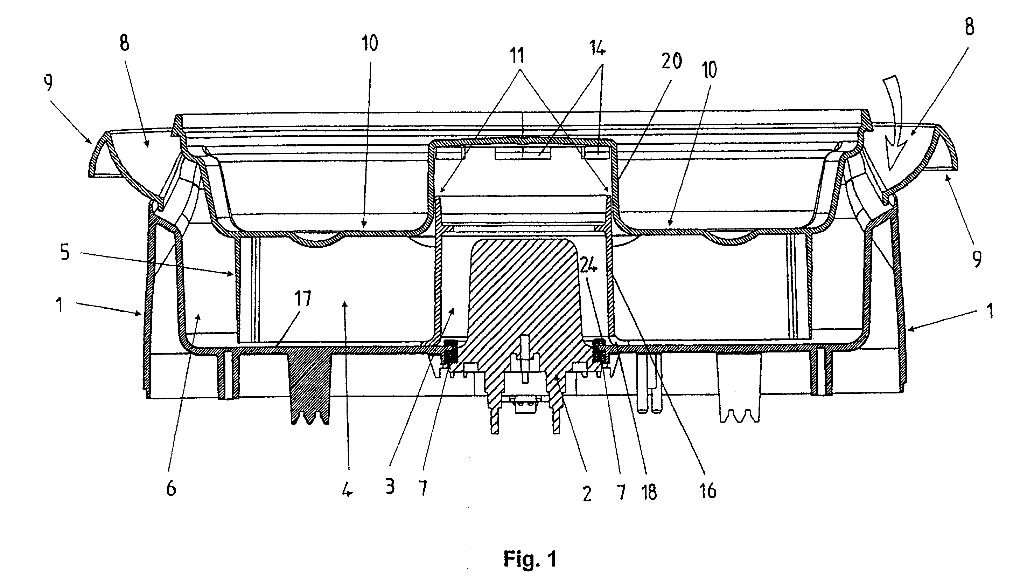

Sur la figure 1, la base 1 est l'ossature principale sur laquelle viennent se placer les autres éléments, notamment le corps de chauffe 2 maintenu par un joint en silicone 7. Ce joint sert non seulement à l'étanchéité, mais également d'isolant thermique. Le joint 7 peut également être réalisé dans d'autres matériaux élastomères. Entourant le corps de chauffe 2, un faible volume d'eau est disposé dans un réservoir secondaire 3 et est transformé en vapeur. L'eau dans ce réservoir est alimentée par un réservoir principal 4, en liaison avec le réservoir secondaire 3 au niveau de leurs bases. La température de l'eau dans le réservoir principal 4 varie en fonction de la distance la séparant du corps de chauffe 2, c'est-à-dire que l'eau aux alentours de la paroi séparant les deux réservoirs est à environ 80°C, cette température diminuant avec l'éloignement de cette source de chaleur. Vers les parois extérieures de la base 1, la température s'élève à environ 50°C. De ce fait, de la vapeur est produite uniquement, en faible quantité, dans la proximité du corps de chauffe et s'accumule au dessus de la surface de l'eau du réservoir principal. Il est certain que, sans la configuration selon l'invention, cette vapeur viendrait à s'échapper vers l'extérieur par un orifice communiquant avec le réservoir principal. C'est pourquoi, dans la forme d'exécution illustrée à la figure 1, une paroi 5 solidaire d'un couvercle 10 receveur de jus, ferme le volume où la vapeur s'accumule. Cette paroi 5 est immergée dans l'eau, ce dernier élément faisant obstruction à la vapeur. Malgré la présence de cette paroi, l'eau versée dans les orifices 8 vient s'accumuler premièrement dans le réservoir de remplissage 6 et, par vases communicants, peut librement alimenter le réservoir principal 4.

Selon le mode d'exécution montré à la figure 1, la paroi séparant le réservoir principal 4 du réservoir secondaire 3 est formée par une couronne 16 entourant le corps de chauffe 2 et présentant à sa base au moins un orifice 18 permettant l'alimentation en eau du réservoir secondaire 3 à partir du réservoir principal 4. La partie supérieure de la couronne 16 est engagée dans un bombement 20 du fond du couvercle 10, présentant sur le haut de ses parois latérales des orifices 14 prévus pour le passage de la vapeur.

Le couvercle 10 receveur de jus est destiné à être placé sous un récipient de cuisson (non représenté aux figures) pour d'une part canaliser la vapeur vers les orifices 14 et d'autre part recevoir les jus s'écoulant du ou des récipients de cuisson disposés au-dessus dudit couvercle. Ainsi les jus s'écoulant des aliments ne risquent pas de venir se mélanger à l'eau des réservoirs.

Il faut noter que la jointure 11 entre le haut du réservoir principal 4 et la couronne 16 délimitant celui-ci avec le réservoir secondaire 3 n'est pas étanche. De ce fait, la pression exercée sur l'air dans le réservoir principal, provoquée par l'augmentation du niveau d'eau du réservoir principal, est évacuée le long de la paroi séparant le réservoir principal et le réservoir secondaire.

Lorsque le niveau d'eau diminue, la paroi 5 de séparation du réservoir de remplissage remplit toujours sa fonction. En effet, le joint silicone 7 forme une nervure 24 annulaire, et s'élève légèrement plus haut que la hauteur de passage sous la paroi 5, avec pour effet que le corps de chauffe 2 n'est plus alimenté en eau alors que de l'eau se trouve sur le fond des deux réservoirs (principal et de remplissage) dans une zone 17 déprimée par rapport à la nervure 24. L'eau assure ainsi la fermeture de la partie inférieure du volume du réservoir principal 4 par un joint d'eau. La vapeur ne peut s'échapper que par les ouvertures 14.

Le joint 7 peut être remplacé par une quelconque protubérance, par exemple une nervure s'élevant du fond d'une hauteur correspondante.

Lorsque le niveau d'eau diminue la génération de vapeur dans le réservoir principal 4 augmente, la température ayant tendance à s'élever puisque la masse d'eau du réservoir principal 4 diminue. Lorsque le niveau d'eau descend au niveau du passage entre les deux réservoirs autorisant ainsi la vapeur générée autour du corps de chauffe 2 de s'échapper vers le réservoir principal 4, la fermeture du volume d'air du réservoir principal 4 est toujours assurée. En effet, la hauteur de passage vers le réservoir secondaire 3 étant plus haute que celle séparant le réservoir principal 4 et le réservoir de remplissage 6, de l'eau se trouve toujours sous la paroi 5 assurant la fonction de bouchon et empêchant la vapeur de refluer dans le réservoir de remplissage 6. Lorsque le niveau d'eau diminue davantage pour descendre au dessous de la paroi 5, l'eau n'arrive plus en contact avec le corps de chauffe 2 grâce au joint silicone 7 et le processus de génération de vapeur est interrompu.

Ainsi, lorsque l'appareil est utilisé sur un support horizontal, à aucun moment de la vapeur ne peut passer dans le réservoir de remplissage, et par conséquent à aucun moment de la vapeur ne peut fuir vers l'orifice de remplissage.

Pour faciliter l'entrée d'eau depuis l'extérieur, on utilise les poignées 9 comme bec receveur. Pour permettre à l'utilisateur d'introduire l'eau à un débit rapide, il est important que la section reliant le réservoir principal 4 au réservoir de remplissage 6 soit importante. Ce but est atteint par le fait que la paroi 5 forme une jupe sous le couvercle 10 receveur de jus et s'étend sur tout le pourtour de la base offrant une surface de passage suffisante pour le rapide équilibrage des niveaux d'eau.

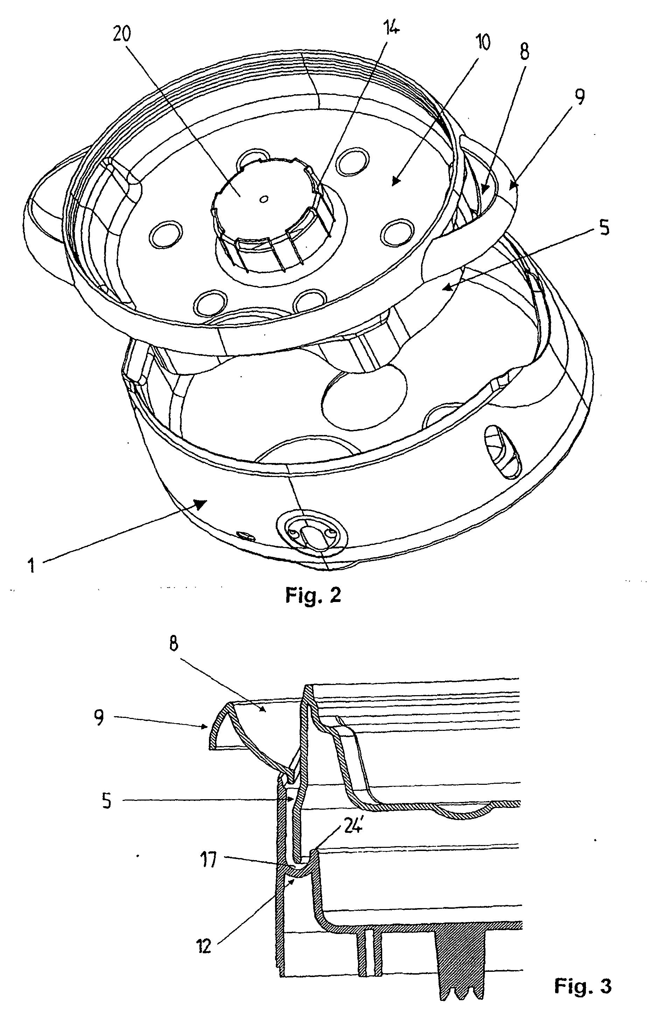

Sur la figure 2, le couvercle 10 receveur de jus est illustré en perspective laissant apparaître sous son fond, la jupe que forme la paroi 5. Cette jupe est continue pour capturer la vapeur générée dans le réservoir principal et l'empêcher de passer dans le volume de remplissage. On observe également les deux poignées 9 en forme de bec receveur disposées sur le couvercle 10, offrant une bonne ouverture à l'eau de remplissage. Le corps de chauffe 2 et la couronne 16 ne sont pas représentés sur la base 1.

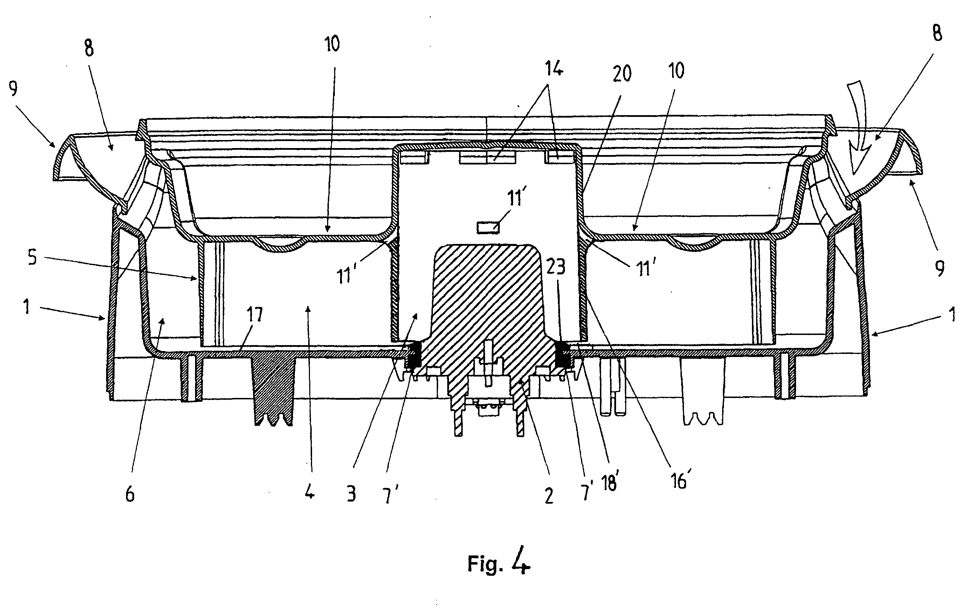

A titre de variante, le joint 7 formant la nervure 24 peut être remplacé par un joint 7' formant un talus 23 entourant la base du bloc de chauffe 2, le bloc de chauffe 2 émergeant du sommet du talus 23, tel que montré à la figure 4. On remarquera également que le réservoir secondaire 3 et le réservoir principal 4 sont délimités par une couronne 16' issue du fond du couvercle 10. La partie inférieure de la couronne 16' ménage un passage annulaire entre le réservoir secondaire 3 et le réservoir principal 4. Des évents 11' sont disposés au sommet de la couronne 16'. Les évents 11' sont orientés vers le haut dans le bombement 20 formant cheminée afin de permettre l'évacuation de l'air dans le réservoir principal 4 lors du remplissage tout en limitant la sortie de vapeur issue du réservoir secondaire 3 dans lequel est disposé le corps de chauffe 2.

La figure 3 nous montre une réalisation différente tout en utilisant le même principe. La paroi 5 précédemment solidaire du fond du couvercle 10 receveur de jus est, dans cette configuration, fixée sur le bord dudit couvercle 10 et s'étend jusqu'à une rigole 12 formée le long du réservoir principal 4. Une nervure annulaire 24' délimite ainsi le réservoir principal 4 et la zone déprimée 17 formée par la rigole 12. On remarquera que l'altitude de la rigole 12 est supérieure à celle du fond du réservoir principal 4, ce qui permet de réduire la hauteur de la paroi 5. Que le remplissage de ce réservoir se fasse par le dessus c'est-à-dire par l'enlèvement du couvercle 10 receveur de jus ou par l'orifice de remplissage 8, la rigole 12 est dans les deux cas de figure, remplie d'eau. Cette eau assure la fermeture du volume situé au dessus du niveau d'eau du réservoir principal 4. Comme mentionné précédemment, la température à la périphérie du réservoir d'eau avoisine les 50°C, ainsi l'eau dans la rigole ne subira pas d'évaporation. Sa fonction d'obstruction à la vapeur générée dans le réservoir principal 4 va demeurer quel que soit le niveau d'eau du réservoir. Pour fonctionner correctement, la rigole 12 est placée de préférence sur tout le pourtour du réservoir principal 4.

Bien que l'eau reste la variante préférée de l'invention, la fonction d'obstruction peut être réalisée par d'autres moyens, par exemple, par la disposition d'un joint en caoutchouc. Selon la réalisation des figures 1 et 2, la jupe formée par la paroi 5 peut être remplacée par une paroi comportant sur ses extrémités latérales des joints prévus pour venir en contact avec les parois latérales de la base 1, un passage étant ménagé entre l'extrémité inférieure de ladite paroi et le fond du réservoir, une telle paroi étant disposée en regard de chaque orifice 8. L'eau présente dans la zone déprimée 17 et les joints font alors obstruction à la vapeur.

D'autres formes d'exécution peuvent permettre, bien que plus compliquées, d'obtenir le même résultat. En effet, la jupe formée par la paroi 5 peut être également un élément indépendant du couvercle 10 receveur de jus. Dans ce cas, il suffit de fixer sur sa tranche supérieure, un joint tubulaire garantissant la fermeture du volume au dessus du réservoir principal. Dans ce cas, cette paroi 5 en forme d'anneau peut être soit un élément indépendant posé sur le fond ou solidaire avec celui-ci ; dans les deux cas de figures, des orifices à sa base permettent à l'eau de circuler.

Jusqu'à présent, on s'est contenté d'une indication visuelle du niveau d'eau et d'un indicateur acoustique lorsque la génération de vapeur est terminée faute d'eau. Avec cette configuration, il devient utile d'informer l'utilisateur avant cette extrémité pour lui laisser la possibilité de rajouter de l'eau s'il le souhaite. A cet effet, un détecteur de niveau d'eau est associé à un indicateur sonore et signale lorsque le niveau d'eau atteint par exemple le dernier quart. L'utilisateur n'a pas besoin de surveiller son appareil et peut rajouter de l'eau en cours de cuisson.

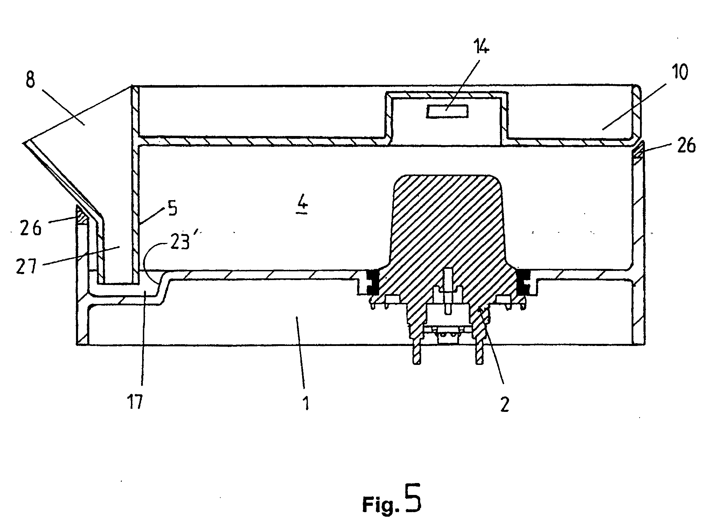

L'exemple de réalisation présenté à la figure 5 se distingue des exemples précédents en ce que la zone déprimée 17 est délimitée d'une part par une paroi latérale de la base 1 et d'autre part par un talus 23' reliant ladite zone déprimée à une zone du réservoir 4 dans laquelle est disposé le corps de chauffe 2. Le couvercle 10 comporte un conduit 27 dont la partie supérieure forme l'orifice de remplissage 8 et dont la partie inférieure forme une paroi 5 tubulaire débouchant dans la zone déprimée 17 lorsque le couvercle 10 est posé sur la base 1. Le sommet du talus 23' présente une altitude supérieure à l'extrémité inférieure de la paroi 5. Comme la paroi 5 n'entoure pas le corps de chauffe 2, les fuites de vapeur entre le couvercle 10 et la base 1 doivent être évitées pour que la vapeur s'échappe par le ou les orifices 14 ménagés dans le couvercle. A cet effet des moyens d'étanchéité sont prévus entre le couvercle 10 et la base 1. Tel que représenté à la figure 5 le couvercle 10 prend appui sur un rebord annulaire 26 formé par un joint surmoulé sur le sommet de la paroi latérale périphérique de la base 1.

A titre de variante, le talus 23' pourrait être remplacé par une nervure. A titre de variante complémentaire, le conduit 27 pourrait être formé dans la paroi latérale de la base 1. D'autres modes de réalisation sont envisageables pour les moyens d'étanchéité.

De nombreuses améliorations peuvent être apportées à cet appareil dans le cadre des revendications.

Notamment le couvercle 10 fermant le réservoir principal 4 et sous lequel est disposée la jupe 5 peut être formé par le fond d'un récipient de cuisson, destiné à recevoir des aliments à cuire, et comportant au moins une ouverture de passage de vapeur disposée en regard du réservoir secondaire de vaporisation.

Les moyens de préhension formés par les poignées 9 peuvent être montés sur la base 1 au lieu du couvercle 10.

Les orifices de remplissage 8 montrés aux figures peuvent être munis de filtres anticalcaires ou destinés à arrêter les particules. Notamment, ces filtres peuvent être montés dans les poignées 9.

Les orifices de remplissage 8 peuvent également être ménagés dans une pièce amovible de la base 1.

Les orifices de remplissage 8 peuvent également être ménagés entre la base 1 et le couvercle 10.

La présente invention trouve son application dans les cuiseurs à vapeur, en particulier électriques, comportant une structure de base pour produire la vapeur, surmontée par un récipient de cuisson.

## Revendications

1. Cuiseur à vapeur, comprenant une structure de base (1), un corps de chauffe (2), un réservoir d'eau (4) en relation avec le corps de chauffe (2), un couvercle (10) fermant le réservoir (4), un orifice de remplissage (8) débouchant sur une paroi extérieure de la base (1) et/ou du couvercle (10), une paroi (5) fermant au moins une partie du volume d'air du réservoir d'eau (4) étant disposée entre le corps de chauffe (2) et l'orifice de remplissage (8), le couvercle (10) présentant au moins une ouverture (14) prévue pour le passage de la vapeur vers un récipient de cuisson disposé au dessus du couvercle, **caractérisé en ce que** la paroi (5) descend dans une zone déprimée (17) reliée au corps de chauffe (2) par un talus (23, 23') ou une nervure (24, 24'), la paroi (5) descendant dans la zone déprimée (17) à une hauteur inférieure à celle du sommet du talus (23, 23') ou de la nervure (24, 24'), l'orifice de remplissage (8) d'une part et le talus (23, 23') ou la nervure (24, 24') d'autre part étant disposés de part et d'autre de la paroi (5).

2. Cuiseur selon la revendication 1, **caractérisé en ce qu'**il comporte un réservoir d'eau secondaire (3) dont l'eau est en contact direct avec le corps de chauffe (2), le réservoir (4) principal étant relié dans sa partie inférieure avec le réservoir secondaire (3), le corps de chauffe (2) étant disposé à l'intérieur du réservoir secondaire (3).

3. Cuiseur selon l'une des revendications 1 ou 2, **caractérisé en ce que** la paroi (5) est issue de la face inférieure du couvercle (10).

4. Cuiseur selon la revendication 3, **caractérisé en ce que** la nervure (24') est disposée à la périphérie du réservoir principal (4) et ménage une rigole (12) dont le fond est surélevé par rapport au fond du réservoir principal (4).

5. Cuiseur selon l'une des revendications 1 à 3, **caractérisé en ce que** la paroi (5) forme une jupe annulaire créant, dans le réservoir principal (4), un volume de remplissage communiquant avec l'orifice de remplissage (8).

6. Cuiseur selon la revendication 5, **caractérisé en ce que** le talus (23) ou la nervure (24) est formé par un joint élastomère (7) disposé autour du corps de chauffe (2) à l'intérieur du réservoir secondaire (3).

7. Cuiseur selon l'une des revendications 1 à 3, **caractérisé en ce que** la paroi (5) forme un conduit (27) dont la partie supérieure constitue l'orifice de remplissage (8).

8. Cuiseur selon l'une des revendications 1 à 7, **caractérisé en ce que** l'orifice de remplissage (8) est intégré dans des moyens de préhension (9) montés sur le couvercle (10) ou la base (1).

9. Cuiseur selon l'une des revendications 1 à 8, **caractérisé en ce que** l'orifice de remplissage est muni d'un filtre.

## Claims

1. A steamer comprising a base structure (1), a heater body (2), a water tank (4) in association with the heater body (2), a cover (10) closing the tank (4), a filler orifice (8) opening out in an outside wall of the base (1), and/or the cover (10), a wall (5) enclosing at least part of the volume of air in the water tank (4) being disposed between the heater body (2) and the filler orifice (8), the cover (10) presenting at least one opening (14) provided for passing steam to a cooking receptacle disposed above the cover, the steamer being **characterized in that** the wall (5) extends downwards into a depressed zone (17) connected to the heater body (2) via a slope (23, 23') or a ridge (24, 24'), the wall (5) extending downwards into the depressed zone (17) to a height below that of the top of the slope (23, 23') or of the ridge (24, 24'), the filler orifice (8) and the slope (23, 23') or the ridge (24, 24') being disposed on opposite sides of the wall (5).

2. A steamer according to claim 1, **characterized in that** it includes a secondary water tank (3) in which the water is in direct contact with the heater body (2), the main tank (4) being connected via its bottom portion with the secondary tank (3), the heater body (2) being disposed inside the secondary tank (3).

3. A steamer according to claim 1 or claim 2, **characterized in that** the wall (5) extends from the bottom face of the cover (10).

4. A steamer according to claim 3, **characterized in that** the ridge (24') is disposed at the periphery of the main tank (4) and provides a gutter (12) whose bottom is higher than the bottom of the main tank (4).

5. A steamer according to any one of claims 1 to 3, **characterized in that** the wall (5) forms an annular skirt, creating a filler volume in the main tank (4), which volume communicates with the filler orifice (8).

6. A steamer according to claim 5, **characterized in that** the slope (23) or the ridge (24) is formed by an elastomer gasket (7) disposed around the heater body (2) inside the secondary tank (3).

7. A steamer according to any one of claims 1 to 3, **characterized in that** the wall (5) forms a duct (27) whose top portion constitutes the filler orifice (8).

8. A steamer according to any one of claims 1 to 7, **characterized in that** the filler orifice (8) is integrated in handle means (9) mounted on the cover (10) or the base (1).

9. A steamer according to any one of claims 1 to 8, **characterized in that** the filler orifice is provided with a filter.

## Patentansprüche

1. Dampfkochtopf mit einer Basisstruktur (1), einem Heizkörper (2), einem Wassertank (4) in Beziehung mit dem Heizkörper (2), einem Deckel (10), der den Tank (4) verschließt, einer Füllöffnung (8), die an einer Außenwand der Basis (1) und/oder des Deckels (10) mündet, wobei eine Wand (5), die wenigstens einen Teil des Luftvolumens des Wassertanks (4) verschließt, zwischen dem Heizkörper (2) und der Füllöffnung (8) angeordnet ist, wobei der Deckel (10) wenigstens eine Öffnung (14) aufweist, die für den Durchgang des Dampfs zu einem über dem Deckel angeordneten Kochbehälter vorgesehen ist, **dadurch gekennzeichnet, daß** die Wand (5) in eine vertiefte Zone (17) absteigt, die mit dem Heizkörper (2) durch eine Schräge (23, 23') oder eine Rippe (24, 24') verbunden ist, wobei die Wand (5) in die vertiefte Zone (17) auf eine Höhe unter derjenigen des Scheitels der Schräge (23, 23') oder der Rippe (24, 24') absteigt, wobei die Füllöffnung (8) auf der einen Seite der Wand (5) und die Schräge (23, 23') oder die Rippe (24, 24') auf der anderen Seite der Wand (5) angeordnet sind.

2. Kochtopf nach Anspruch 1, **dadurch gekennzeichnet, daß** er einen Sekundärwassertank (3) aufweist, dessen Wasser in direktem Kontakt mit dem Heizkörper (2) steht, wobei der Haupttank (4) in seinem unteren Teil mit dem Sekundärtank (3) verbunden ist, wobei der Heizkörper (2) im Inneren des Sekundärtanks (3) angeordnet ist.

3. Kochtopf nach einem der Ansprüche 1 oder 2, **dadurch gekennzeichnet, daß** die Wand (5) aus der Unterseite des Deckels (10) herausgeführt ist.

4. Kochtopf nach Anspruch 3, **dadurch gekennzeichnet, daß** die Rippe (24') am Umfang des Haupttanks (4) angeordnet ist und eine Rinne (12) bildet, deren Boden bezüglich des Bodens des Haupttanks (4) überhöht ist.

5. Kochtopf nach einem der Ansprüche 1 bis 3, **dadurch gekennzeichnet, daß** die Wand (5) eine ringförmige Schürze bildet, die in dem Haupttank (4) ein Füllvolumen schafft, das mit der Füllöffnung (8) in Verbindung steht.

6. Kochtopf nach Anspruch 5, **dadurch gekennzeichnet, daß** die Schräge (23) oder die Rippe (24) durch eine Elastomerdichtung (7) gebildet ist, die um den Heizkörper (2) im Inneren des Sekundärtanks (3) angeordnet ist.

7. Kochtopf nach einem der Ansprüche 1 bis 3, **dadurch gekennzeichnet, daß** die Wand (5) einen Kanal (27) bildet, dessen obererer Teil die Füllöffnung (8) bildet.

8. Kochtopf nach einem der Ansprüche 1 bis 7, **dadurch gekennzeichnet, daß** die Füllöffnung (8) in Greifmittel (9) integriert ist, die an dem Deckel (10) oder der Basis (1) angebracht sind.

9. Kochtopf nach einem der Ansprüche 1 bis 8, **dadurch gekennzeichnet, daß** die Füllöffnung mit einem Filter ausgestattet ist.
